# EUROPEAN PATENT APPLICATION

(11) **EP 4 836 539 A1**
(43) Date of publication of application: **04.11.2026**
(21) Application number: 25741403.7
(22) Date of filing: 09.01.2025
(51) Int. Cl.: H04W 52/02, H04W 68/02

(54) **SIGNAL TRANSMISSION METHOD AND COMMUNICATION APPARATUS**

(30) Priority: 18.01.2024 CN 202410076894
(71) Applicant: Huawei Technologies Co., Ltd., Shenzhen, Guangdong 518129 (CN)
(72) Inventor: XUE, Yifan, Shenzhen, Guangdong 518129 (CN); KUANG, Yiru, Shenzhen, Guangdong 518129 (CN)
(74) Representative: Gill Jennings & Every LLP
(86) International application number: PCT/CN2025/071437
(87) International publication number: WO 2025/152841

(57) **Abstract**

This application provides a signal transmission method and a communication apparatus. The method includes: determining a time domain resource of a reference signal and a time domain resource of a wake-up signal; receiving the reference signal on a part or all of the time domain resource of the reference signal; and monitoring the wake-up signal on the time domain resource of the wake-up signal. In view of this, a terminal device may receive the reference signal and the wake-up signal on the determined time domain resources, to avoid missing detection of the reference signal or the wake-up signal when the reference signal and the wake-up signal are simultaneously transmitted.

## Description

This application claims priority to Chinese Patent Application No. 202410076894.6, filed with the China National Intellectual Property Administration on January 18, 2024 and entitled "SIGNAL TRANSMISSION METHOD AND COMMUNICATION APPARATUS", which is incorporated herein by reference in its entirety.

### TECHNICAL FIELD

This application relates to the wireless communication field, and more specifically, to a signal transmission method and a communication apparatus.

### BACKGROUND

A terminal device may receive a wake-up signal via a separate low-power small circuit, for example, a wake-up radio (wake-up radio, WUR), and a main circuit may be in a sleep state. After the terminal device detects the wake-up signal via the WUR, the terminal device triggers wake-up of the main circuit. After the main circuit is woken up, the terminal device may receive another signal, for example, a reference signal, via the main circuit.

### SUMMARY

This application provides a signal transmission method and a communication apparatus, so that after a wake-up signal is introduced, a terminal device can also receive a reference signal without missing detection of the wake-up signal.

According to a first aspect, a signal transmission method is provided. The method may be performed by an apparatus. The apparatus may be a device (for example, a terminal device), or may be a component (for example, a chip, a chip system, or a circuit) of the device. This is not limited in this application.

The method may include: determining a time domain resource of a reference signal and a time domain resource of a wake-up signal; receiving the reference signal on a part or all of the time domain resource of the reference signal; and monitoring the wake-up signal on the time domain resource of the wake-up signal.

Based on the foregoing technical solution, the terminal device is used as an example. Considering that the terminal device may receive the wake-up signal via a wake-up circuit, or may receive another signal (for example, the reference signal) via a main circuit, the terminal device may determine the time domain resource of the reference signal and the time domain resource of the wake-up signal. In this way, the reference signal may be received on the part or all of the time domain resource of the reference signal based on the determined time domain resource of the reference signal, and the wake-up signal may be monitored on the time domain resource of the wake-up signal based on the determined time domain resource of the wake-up signal. In view of this, the terminal device can receive the reference signal and monitor the wake-up signal on the determined time domain resources. In addition, the time domain resource of the reference signal may be different from the time domain resource of the wake-up signal. In this way, transmission of two types of signals (that is, the reference signal and the wake-up signal) may be performed on different time domain resources, to avoid missing detection of the signal (for example, missing detection of the wake-up signal) when the reference signal and the wake-up signal are simultaneously transmitted at a position. Compared with that the terminal device receives the reference signal or the wake-up signal at any position, the foregoing technical solution can avoid a case that the terminal device misses detection of the wake-up signal.

With reference to the first aspect, in some implementations of the first aspect, the reference signal is a signal used for measurement, and the wake-up signal is used to wake-up at least one terminal device.

With reference to the first aspect, in some implementations of the first aspect, the method further includes: sending at least one piece of capability information, where each of the at least one piece of capability information indicates whether a first-type signal and a second-type signal can be simultaneously received, the first-type signal includes the wake-up signal, the second-type signal includes the reference signal, on-off-keying OOK modulation is used for the first-type signal, and non-OOK modulation is used for the second-type signal.

Based on the foregoing technical solution, the terminal device may report capability information of the terminal device, for example, whether the terminal device can simultaneously receive the first-type signal and the second-type signal, or whether the terminal device can simultaneously receive a signal for which OOK modulation is used and a signal for which non-OOK modulation is used. This facilitates a network side (for example, a network device) to perform corresponding processing based on the capability reported by the terminal device. For example, if the terminal device cannot simultaneously receive the first-type signal and the second-type signal, the network side may configure, for the terminal device, a time domain resource of a corresponding reference signal and a time domain resource of a corresponding wake-up signal, so that the time domain resource of the wake-up signal and the time domain resource of the reference signal are staggered, to avoid missing detection of a signal.

With reference to the first aspect, in some implementations of the first aspect, one of the at least one piece of capability information is per band or per band combination.

Based on the foregoing technical solution, the capability information may be per band (per band), or may be per band combination (per band combination). In this way, the terminal device can report capability information of each band or band combination for different bands or different band combinations.

With reference to the first aspect, in some implementations of the first aspect, the method further includes: receiving the first-type signal via the wake-up circuit, and receiving the second-type signal via the main circuit.

Based on the foregoing technical solution, the first-type signal and the second-type signal may be signals received by the terminal device via different circuits. In this way, the capability information reported by the terminal device may alternatively be whether the terminal device can simultaneously receive signals via the main circuit and the wake-up circuit.

With reference to the first aspect, in some implementations of the first aspect, the method further includes: skipping monitoring the wake-up signal on the time domain resource of the reference signal.

Based on the foregoing technical solution, the terminal device may not monitor the wake-up signal on the time domain resource of the reference signal. For example, the network device may configure, for the terminal device, the time domain resource of the reference signal. In this way, the network device sends the reference signal on the time domain resource of the reference signal, and does not send the wake-up signal, and the terminal device may not monitor the wake-up signal on the time domain resource of the reference signal. In this way, the terminal device and the network device can align a time domain resource position for measurement and a time domain resource position for monitoring the wake-up signal, to avoid missing detection of the wake-up signal, and power consumption caused by the terminal device for monitoring the wake-up signal can be reduced.

With reference to the first aspect, in some implementations of the first aspect, the determining the time domain resource of the reference signal includes: receiving configuration information, where the configuration information includes information about the time domain resource of the reference signal.

With reference to the first aspect, in some implementations of the first aspect, the time domain resource of the reference signal includes at least one time window; or the time domain resource of the reference signal includes a first time domain resource in the at least one time window, and the first time domain resource is a time domain resource on which the reference signal is transmitted.

Based on the foregoing technical solution, the terminal device may receive the reference signal on centralized time domain resources (that is, the at least one time window). In this way, if the terminal device receives the reference signal via the main circuit, and receives the wake-up signal via the wake-up circuit, a quantity of switching times of the main circuit/wake-up circuit (or sleep/wake-up) of the terminal device can be reduced, thereby reducing power consumption of the terminal device.

With reference to the first aspect, in some implementations of the first aspect, the time domain resource of the reference signal includes the at least one time window, and the method further includes: skipping monitoring the wake-up signal in the at least one time window.

With reference to the first aspect, in some implementations of the first aspect, the time domain resource of the reference signal includes the first time domain resource in the at least one time window, and the method further includes: skipping monitoring the wake-up signal on the first time domain resource, and/or monitoring the wake-up signal on a time domain resource in the at least one time window other than the first time domain resource.

With reference to the first aspect, in some implementations of the first aspect, the method further includes: receiving first indication information, where the first indication information indicates the at least one time window.

Optionally, the first indication information includes at least one of the following: a start position of the at least one time window, a start position of one of the at least one time window, an end position of the at least one time window, an end position of one of the at least one time window, a length of the at least one time window, a length of one of the at least one time window, a time interval between two adjacent time windows in the at least one time window, or an offset. The offset represents an offset between the at least one time window and connected discontinuous reception CDRX.

Optionally, the offset between the at least one time window and the connected discontinuous reception CDRX includes any one of the following: an offset between the start position of the at least one time window and a start position of CDRX on duration OnDuration, an offset between the start position of the at least one time window and an end position of the CDRX OnDuration, an offset between the start position of the at least one time window and a middle position of the CDRX OnDuration, an offset between the start position of any one of the at least one time window and the start position of the CDRX OnDuration, an offset between the start position of any one of the at least one time window and the end position of the CDRX OnDuration, or an offset between the start position of any one of the at least one time window and the middle position of the CDRX OnDuration.

With reference to the first aspect, in some implementations of the first aspect, the at least one time window is predefined.

Optionally, the offset between the at least one time window and the CDRX is predefined. For example, the offset includes any one of the following: an offset between the start position of the at least one time window and a start position of CDRX OnDuration, an offset between the start position of the at least one time window and an end position of the CDRX OnDuration, an offset between the start position of the at least one time window and a middle position of the CDRX OnDuration, an offset between the start position of any one of the at least one time window and the start position of the CDRX OnDuration, an offset between the start position of any one of the at least one time window and the end position of the CDRX OnDuration, or an offset between the start position of any one of the at least one time window and the middle position of the CDRX OnDuration.

With reference to the first aspect, in some implementations of the first aspect, the time domain resource of the reference signal is different from the time domain resource of the wake-up signal; or the time domain resource of the reference signal is a resource other than the time domain resource of the wake-up signal.

Based on the foregoing technical solution, the time domain resource of the reference signal and the time domain resource of the wake-up signal that are received by the terminal device are different. In this way, the terminal device can either receive the reference signal or receive the wake-up signal at a same time, to avoid missing detection of the wake-up signal or the reference signal because transmission of the wake-up signal is further performed during transmission of the reference signal. In addition, the terminal device may determine the time domain resource of the reference signal based on the time domain resource of the wake-up signal, that is, the time domain resource of the reference signal is a time domain resource different from the time domain resource of the wake-up signal.

With reference to the first aspect, in some implementations of the first aspect, the receiving the reference signal on the part or all of the time domain resource of the reference signal includes: receiving the reference signal on the part or all of the time domain resource of the reference signal via the main circuit; and the monitoring the wake-up signal on the time domain resource of the wake-up signal includes: monitoring the wake-up signal on the time domain resource of the wake-up signal via the wake-up circuit.

With reference to the first aspect, in some implementations of the first aspect, the method further includes: sending second indication information, where the second indication information indicates a time domain resource that is expected by the terminal device for transmission of the reference signal.

Based on the foregoing technical solution, the terminal device may report, to the network device, an expected time domain resource for transmission of the reference signal. In this way, the network device may determine the time domain resource (for example, the foregoing time window) of the reference signal based on the time domain resource expected by the terminal device in the second indication information. In this way, the configured time domain resource of the reference signal can better meet a requirement of the terminal device.

With reference to the first aspect, in some implementations of the first aspect, the time domain resource of the wake-up signal is discontinuous, or the time domain resource of the wake-up signal is periodic.

With reference to the first aspect, in some implementations of the first aspect, a modulation scheme of the wake-up signal is the OOK modulation, and a modulation scheme of the reference signal is the non-OOK modulation.

With reference to the first aspect, in some implementations of the first aspect, the reference signal is used to perform at least one of the following: radio link monitoring, beam failure detection, channel measurement, radio resource management measurement, or beam measurement.

With reference to the first aspect, in some implementations of the first aspect, the radio resource management measurement includes serving cell measurement and/or neighbor cell measurement.

With reference to the first aspect, in some implementations of the first aspect, the neighbor cell measurement includes at least one of the following: intra-frequency measurement, inter-frequency measurement, or inter-radio access technology measurement.

According to a second aspect, a signal transmission method is provided. The method may be performed by an apparatus. The apparatus may be a device (for example, a network device), or may be a component (for example, a chip, a chip system, or a circuit) of the device. This is not limited in this application.

The method may include: determining a time domain resource of a reference signal and a time domain resource of a wake-up signal; sending the reference signal on a part or all of the time domain resource of the reference signal; and sending the wake-up signal on a part or all of the time domain resource of the wake-up signal.

With reference to the second aspect, in some implementations of the second aspect, the reference signal is a signal used for measurement, and the wake-up signal is used to wake-up at least one terminal device.

With reference to the second aspect, in some implementations of the second aspect, the method further includes: receiving at least one piece of capability information, where each of the at least one piece of capability information indicates whether a first-type signal and a second-type signal can be simultaneously received, the first-type signal includes the wake-up signal, the second-type signal includes the reference signal, on-off-keying OOK modulation is used for the first-type signal, and non-OOK modulation is used for the second-type signal.

With reference to the second aspect, in some implementations of the second aspect, one of the at least one piece of capability information is per band or per band combination.

With reference to the second aspect, in some implementations of the second aspect, the method further includes: sending the first-type signal via a wake-up circuit, and sending the second-type signal via a main circuit.

With reference to the second aspect, in some implementations of the second aspect, the method further includes: skipping sending the wake-up signal on the time domain resource of the reference signal.

With reference to the second aspect, in some implementations of the second aspect, the method further includes: sending configuration information, where the configuration information includes information about the time domain resource of the reference signal.

With reference to the second aspect, in some implementations of the second aspect, the time domain resource of the reference signal includes at least one time window; or the time domain resource of the reference signal includes a first time domain resource in the at least one time window, and the first time domain resource is a time domain resource on which the reference signal is transmitted.

With reference to the second aspect, in some implementations of the second aspect, the time domain resource of the reference signal includes the at least one time window, and the method further includes: skipping sending the wake-up signal in the at least one time window.

With reference to the second aspect, in some implementations of the second aspect, the time domain resource of the reference signal includes the first time domain resource in the at least one time window, and the method further includes: skipping sending the wake-up signal on the first time domain resource, and/or sending the wake-up signal on a time domain resource in the at least one time window other than the first time domain resource.

With reference to the second aspect, in some implementations of the second aspect, the method further includes: sending first indication information, where the first indication information indicates the at least one time window.

With reference to the second aspect, in some implementations of the second aspect, the at least one time window is predefined.

With reference to the second aspect, in some implementations of the second aspect, the time domain resource of the reference signal is different from the time domain resource of the wake-up signal; or the time domain resource of the reference signal is a resource other than the time domain resource of the wake-up signal.

With reference to the second aspect, in some implementations of the second aspect, the sending the reference signal on the part or all of the time domain resource of the reference signal includes: sending the reference signal on the part or all of the time domain resource of the reference signal via the main circuit; and the sending the wake-up signal on the part or all of the time domain resource of the wake-up signal includes: sending the wake-up signal on the part or all of the time domain resource of the wake-up signal via the wake-up circuit.

With reference to the second aspect, in some implementations of the second aspect, the method further includes: receiving second indication information, where the second indication information indicates a time domain resource that is expected by the terminal device for transmission of the reference signal.

With reference to the second aspect, in some implementations of the second aspect, the time domain resource of the wake-up signal is discontinuous, or the time domain resource of the wake-up signal is periodic.

With reference to the second aspect, in some implementations of the second aspect, a modulation scheme of the wake-up signal is the OOK modulation, and a modulation scheme of the reference signal is the non-OOK modulation.

With reference to the second aspect, in some implementations of the second aspect, the reference signal is used to perform at least one of the following: radio link monitoring, beam failure detection, channel measurement, radio resource management measurement, or beam measurement.

With reference to the second aspect, in some implementations of the second aspect, the radio resource management measurement includes serving cell measurement and/or neighbor cell measurement.

With reference to the second aspect, in some implementations of the second aspect, the neighbor cell measurement includes at least one of the following: intra-frequency measurement, inter-frequency measurement, or inter-radio access technology measurement.

According to a third aspect, a communication method is provided. The method may be performed by an apparatus. The apparatus may be a device (for example, a terminal device), or may be a component (for example, a chip, a chip system, or a circuit) of the device. This is not limited in this application.

The method may include: sending at least one piece of capability information, where each of the at least one piece of capability information indicates whether a first-type signal and a second-type signal can be simultaneously received, on-off-keying OOK modulation is used for the first-type signal, and non-OOK modulation is used for the second-type signal.

With reference to the third aspect, in some implementations of the third aspect, one of the at least one piece of capability information is per band or per band combination.

With reference to the third aspect, in some implementations of the third aspect, the method further includes: receiving the first-type signal via a wake-up circuit, and receiving the second-type signal via a main circuit.

With reference to the third aspect, in some implementations of the third aspect, the first-type signal includes a wake-up signal and/or a low-power synchronization signal; and the second-type signal includes a signal other than the wake-up signal and/or the low-power synchronization signal.

According to a fourth aspect, a communication method is provided. The method may be performed by an apparatus. The apparatus may be a device (for example, a network device), or may be a component (for example, a chip, a chip system, or a circuit) of the device. This is not limited in this application.

The method may include: receiving at least one piece of capability information, where each of the at least one piece of capability information indicates whether a first-type signal and a second-type signal can be simultaneously received, on-off-keying OOK modulation is used for the first-type signal, and non-OOK modulation is used for the second-type signal.

With reference to the fourth aspect, in some implementations of the fourth aspect, one of the at least one piece of capability information is per band or per band combination.

With reference to the fourth aspect, in some implementations of the fourth aspect, the method further includes: sending the first-type signal via a wake-up circuit, and sending the second-type signal via a main circuit.

With reference to the fourth aspect, in some implementations of the fourth aspect, the first-type signal includes a wake-up signal and/or a low-power synchronization signal; and the second-type signal includes a signal other than the wake-up signal and/or the low-power synchronization signal.

For the second aspect to the fourth aspect and the possible designs and beneficial effects, refer to related descriptions of the first aspect. Details are not described herein again.

According to a fifth aspect, a communication apparatus is provided. The apparatus is configured to perform the method according to any one of the possible implementations of the first aspect to the fourth aspect. Specifically, the apparatus may include a unit and/or a module, for example, a processing unit and/or a communication unit, configured to perform the method according to any one of the possible implementations of the first aspect to the fourth aspect.

In an implementation, the apparatus is a communication apparatus (for example, a terminal device or a network device). When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication apparatus (for example, a terminal device or a network device). When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method according to any one of the possible implementations of the first aspect to the fourth aspect. Optionally, the apparatus further includes the memory, configured to store the computer program or the instructions. Optionally, the apparatus further includes a communication interface, and the processor reads, through the communication interface, the computer program or the instructions in the memory.

In an implementation, the apparatus is a communication apparatus (for example, a terminal device or a network device).

In another implementation, the apparatus is a chip, a chip system, or a circuit used in a communication apparatus (for example, a terminal device or a network device).

According to a seventh aspect, a processor is provided, configured to perform the method provided in the first aspect to the fourth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

Optionally, the apparatus further includes a memory, configured to store a program. Correspondingly, at least one processor is configured to execute a computer program or instructions in the memory.

Optionally, the apparatus further includes a communication interface. The communication interface is coupled to the processor, and may be configured to input information to the processor, or output information in the processor.

According to an eighth aspect, a computer-readable storage medium is provided. The computer-readable storage medium stores program code to be executed by a device, and the program code includes the method according to any one of the possible implementations of the first aspect to the fourth aspect.

According to a ninth aspect, a computer program product including instructions is provided. When the computer program product runs on a computer, the computer is enabled to perform the method according to any one of the possible implementations of the first aspect to the fourth aspect.

According to a tenth aspect, a chip is provided. The chip includes a processor and a communication interface. The processor reads, through the communication interface, instructions stored in a memory, to perform the method provided in any one of the foregoing implementations of any one of the first aspect to the fourth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing implementations of any one of the first aspect to the fourth aspect.

According to an eleventh aspect, a computer program product including instructions is provided. When the computer program product runs on a computer, the computer is enabled to perform the method provided in any one of the foregoing implementations of the first aspect.

According to a twelfth aspect, a communication system is provided, including the terminal device and the network device described above.

### BRIEF DESCRIPTION OF DRAWINGS

FIG. 1 is a diagram of a wireless communication system applicable to an embodiment of this application;
FIG. 2 is a diagram of a main circuit and a wake-up circuit;
FIG. 3 is a diagram in which a wake-up circuit and a main circuit are connected to an antenna;
FIG. 4 is a diagram of a signal transmission method 400 according to an embodiment of this application;
FIG. 5 is a diagram of Solution 1 applicable to an embodiment of this application;
FIG. 6 is a diagram of Solution 2 applicable to an embodiment of this application;
FIG. 7 is another diagram of Solution 2 applicable to an embodiment of this application;
FIG. 8 is a diagram of Solution 3 applicable to an embodiment of this application;
FIG. 9 is a block diagram of a communication apparatus 900 according to an embodiment of this application;
FIG. 10 is a diagram of another communication apparatus 1000 according to an embodiment of this application; and
FIG. 11 is a diagram of a chip system 1100 according to an embodiment of this application.

### DESCRIPTION OF EMBODIMENTS

The following describes the technical solutions of this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system. The technical solutions provided in this application may be further applied to a non-terrestrial network (non-terrestrial network, NTN) system like inter-satellite communication and satellite communication systems.

For example, the satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low Earth orbit satellite, a medium Earth orbit satellite, a high Earth orbit satellite, or the like. Alternatively, the satellite may be a non-terrestrial base station, a non-terrestrial device, or the like.

For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication.

A device in a communication system may send a signal to another device or receive a signal from another device. The signal may include information, signaling, data, and the like. The device may alternatively be replaced with an entity, a network entity, a communication device, a communication module, a node, a communication node, or the like. In this disclosure, the device is used as an example for description.

A terminal device in embodiments of this application includes various devices having a wireless communication function, and the terminal device may be configured to be connected to a person, an object, a machine, and the like. The terminal device may be widely used in various scenarios such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, or an airplane), a ship, a remote control device, a smart home device, or an industrial device, may be an apparatus built in the foregoing device (for example, a communication module, a modem, or a chip in the foregoing device), or may be another processing device connected to the wireless modem. For ease of description, the following uses an example in which the terminal device is a terminal or a UE for description.

It should be understood that, in some scenarios, the UE may be further configured to serve as a base station. For example, the UE may serve as a scheduling entity that provides a sidelink signal between UEs in a scenario like V2X, D2D, or P2P.

In embodiments of this application, an apparatus configured to implement a function of the terminal device, namely, a terminal apparatus, may be a terminal device, or may be an apparatus that can support the terminal device in implementing the function, for example, a chip system or a chip, where the apparatus may be installed in the terminal device. In embodiments of this application, the chip system may include a chip, or may include a chip and another discrete component.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmitting point, a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or a radio unit (radio unit, RU). The CU and the DU may be separately disposed, or may be included in a same network element, for example, a BBU. The RU may be included in a radio frequency device or a radio frequency unit, for example, included in an RRU, an AAU, or an RRH.

In different systems, the CU (or the CU-CP and the CU-UP), the DU, or the RU may also have different names, but a person skilled in the art may understand meanings thereof. For example, the radio access network may alternatively be in an open radio access network (open radio access network, O-RAN) architecture. In an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). Any one of the CU (or the CU-CP or the CU-UP), the DU, and the RU in this application may be implemented via a software module, a hardware module, or a combination of a software module and a hardware module.

In embodiments of this application, an apparatus configured to implement a function of the network device may be a network device, or may be an apparatus that can support the network device in implementing the function, for example, a chip system or a chip, where the apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

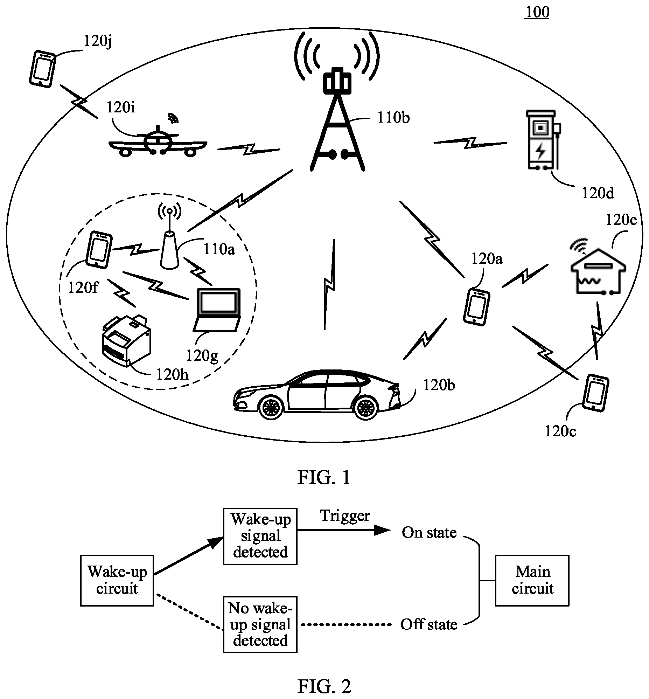

First, a communication system applicable to embodiments of this application is briefly described below with reference to FIG. 1.

For example, FIG. 1 is a diagram of a wireless communication system applicable to an embodiment of this application. As shown in FIG. 1, the wireless communication system includes a radio access network 100. The radio access network 100 may be a next generation (for example, 6G or a later version) radio access network, or a conventional (for example, 5G, 4G, 3G, or 2G) radio access network. One or more terminal devices (120a to 120j, collectively referred to as 120) may be interconnected or connected to one or more network devices (110a and 110b, collectively referred to as 110) in the radio access network 100. Network elements in the wireless communication system are connected through an interface (for example, NG or Xn) or an air interface.

When the network device communicates with the terminal device, the network device may manage one or more cells, and one cell may include at least one terminal device. The cell may be understood as an area within coverage of a radio signal of the network device.

FIG. 1 is only a diagram. The wireless communication system may further include another device, for example, may further include a core network device, a wireless relay device, and/or a wireless backhaul device, which are not shown in FIG. 1.

For ease of understanding of embodiments of this application, terms in this application are briefly described.
1. Wake-up circuit: It is also referred to as a wake-up receiver/radio (wake-up receiver/radio, WUR), a low-power wake-up receiver (low-power wake-up receiver, LP-WUR), or a wake-up module, and may be understood as a separate low-power small circuit, for example, a circuit used by the terminal device in an idle state. The low-power small circuit may be implemented via a separate small circuit or chip with a simple structure, and has low power consumption. It may be understood that, the wake-up circuit is merely named for differentiation, and a specific name thereof does not limit the protection scope of this application. For example, without loss of generality, the wake-up circuit may also be described as a first circuit (or a first module). The following uses the wake-up circuit for a uniform description.

A signal received by the terminal device via the wake-up circuit may be referred to as transmission on a wake-up link. The wake-up link represents a connection relationship between the terminal device and the network device, and is a logical concept rather than a physical entity. It may be understood that, the wake-up link is merely named for differentiation, and a specific name thereof does not limit the protection scope of this application. For example, without loss of generality, the wake-up link may also be described as a first link. The following uses the wake-up link for a uniform description.

For differentiation, for example, the signal received by the terminal device via the wake-up circuit may be referred to as a first-type signal. It may be understood that, the first-type signal is merely named for differentiation, and a specific name thereof does not limit the protection scope of this application. For example, without loss of generality, the first-type signal may also be referred to as a signal. The following uses the first-type signal for a uniform description.

For example, the first-type signal includes a wake-up signal (wake-up signal, WUS) and/or a synchronization signal.

The wake-up signal may be used to wake-up at least one terminal device. Waking up the terminal device indicates waking up a main circuit of the terminal device. For example, the wake-up signal indicates paging-related information, and the paging-related information may include, for example, whether one terminal device or one group of terminal devices is paged. The wake-up signal may also be referred to as a low-power wake-up signal (low-power wake-up signal, LP-WUS), and a specific name thereof does not limit the protection scope of this application.

The synchronization signal may be used to implement a synchronization function, and may be further used to implement some measurement functions performed via the wake-up circuit, for example, radio resource management (radio resource management, RRM) measurement (RRM measurement). The synchronization signal may also be referred to as a low-power synchronization signal (low-power synchronization signal, LP-SS).

2. Main circuit: It is also referred to as a main receiver (main receiver, MR) or a main module, and may be understood as a circuit used when the terminal device normally performs transmission of data, or a circuit used when the terminal device performs transmission of data in a connected state. When the terminal device performs transmission of data via the main circuit, power consumption is high. It may be understood that, the main circuit is merely named for differentiation, and a specific name thereof does not limit the protection scope of this application. For example, without loss of generality, the main circuit may also be described as a second circuit (or a second module). The following uses the main circuit for a uniform description.

A signal received by the terminal device via the main circuit may be referred to as transmission on a main link. The main link represents a connection relationship between the terminal device and the network device, and is a logical concept rather than a physical entity. It may be understood that, the main link is merely named for differentiation, and a specific name thereof does not limit the protection scope of this application. For example, without loss of generality, the main link may also be described as a second link. The following uses the main link for a uniform description.

In the following, for differentiation, the signal received by the terminal device via the main circuit is denoted as a second-type signal.

For example, FIG. 2 is a diagram of a main circuit and a wake-up circuit.

As shown in FIG. 2, the terminal device may receive (or detect, or monitor) a first-type signal (for example, a wake-up signal) via the wake-up circuit, and the terminal device may receive a second-type signal via the main circuit. It is assumed that the terminal device receives the wake-up signal via the wake-up circuit. If the terminal device detects no wake-up signal, the terminal device continues receiving the wake-up signal via the wake-up circuit, and the main circuit may be in an off state (or a sleep state). If the terminal device detects the wake-up signal, the terminal device triggers wake-up of the main circuit, that is, enables the main circuit to be in/be switched to an on state (or referred to as an operating state or an active state). After the main circuit is turned on, the terminal device may perform transmission of the second-type signal via the main circuit.

3. Relationship between the wake-up circuit and the main circuit: Considering a size and a cost, the wake-up circuit and the main circuit may reuse a same antenna (or referred to as a physical antenna).

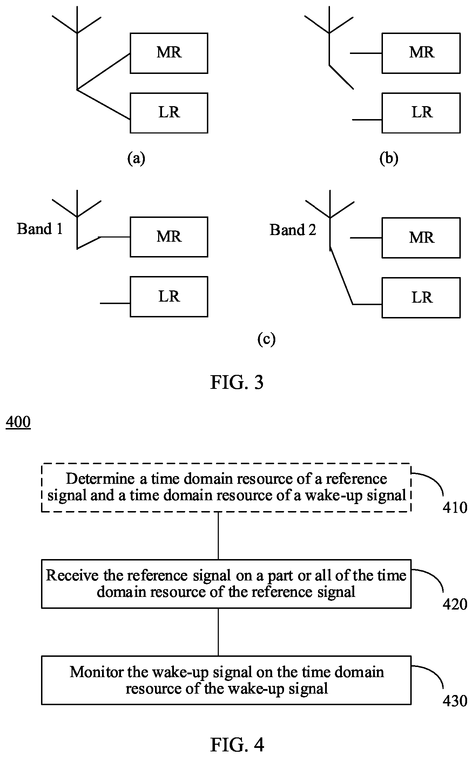

With reference to FIG. 3, the following describes two possible manners in which the wake-up circuit and the main circuit are connected to the antenna.

Manner 1: The antenna is separately connected to the wake-up circuit and the main circuit. In this case, the wake-up circuit and the main circuit may simultaneously receive signals.

For example, FIG. 3 is a diagram in which a wake-up circuit and a main circuit are connected to an antenna. As shown in (a) in FIG. 3, the antenna is separately connected to the wake-up circuit (represented by LR in FIG. 3) and the main circuit (represented by MR in FIG. 3). In this case, power of a signal received by the antenna is split. Therefore, signal power of the wake-up circuit and the main circuit is attenuated, for example, attenuated by 3 dB.

Manner 2: The antenna is connected to the wake-up circuit or the main circuit through a switch. In this case, the wake-up circuit and the main circuit may not simultaneously receive signals, or may simultaneously receive signals. As shown in (b) or (c) in FIG. 3, the antenna may be connected to the wake-up circuit or the main circuit through a switch. In this case, because the switch is introduced, power of a signal received by the antenna is also attenuated, but attenuation is smaller than that of splitting. In (b) in FIG. 3, because the switch is connected either to the wake-up circuit or to the main circuit, the wake-up circuit and the main circuit do not simultaneously receive signals. In addition, considering that the wake-up circuit and the main circuit may be related to an operating frequency, when Manner 2 is used, if the wake-up circuit and the main circuit operate at different frequencies, the wake-up circuit and the main circuit may simultaneously receive signals. As shown in (c) in FIG. 3, if the wake-up circuit operates in a band (band) 1, the main circuit operates in a band 2, and the terminal device receives signals of the band 1 and the band 2 by using different antennas, even if the connection is performed through the switch, the wake-up circuit and the main circuit may still simultaneously receive signals.

It can be learned from the foregoing that, depending on a hardware structure of the terminal device, the wake-up circuit and the main circuit may simultaneously receive signals, or may not simultaneously receive signals.

4. Reference signal (reference signal, RS) and reference signal resource: The reference signal may be used for channel measurement, beam measurement, channel estimation, and the like. The reference signal resource may be used for configuring a transmission attribute of the reference signal, for example, a time-frequency resource position, a port mapping relationship, a power factor, and a scrambling code. A transmit end device may send the reference signal based on the reference signal resource, and a receive end device may receive the reference signal based on the reference signal resource.

5. Time domain resource: Data or information may be carried on a resource. In time domain, the resource may be referred to as a time domain resource. The time domain resource may include one or more time domain units (or may be referred to as time units). One time domain unit may be one symbol (symbol), one orthogonal frequency division multiplexing (orthogonal frequency division multiplexing, OFDM) symbol, one mini-slot (mini-slot), one slot (slot), one partial slot (partial slot), one subframe (subframe), one radio frame (frame), or the like.

6. Measurement: The terminal device in a connected state may perform various types of measurement. Specifically, measurement may be performed based on a reference signal. The following briefly describes several types.

### (1) Radio link monitoring (radio link monitoring, RLM) and beam failure detection (beam failure detection, BFD)

A procedure in which the terminal device performs RLM is similar to a procedure in which the terminal device performs BFD. The following uses RLM as an example to describe possible steps.

Step 1: The terminal device receives a reference signal. For example, the reference signal may be a synchronization signal block (synchronization signal block, SSB) or a channel state information reference signal (channel state information reference signal, CSI-RS).

A UE specific (UE specific) configuration may be performed on a resource used for RLM by using an RLM configuration (radioLinkMonitoringConfig) in bandwidth part (bandwidth part, BWP)-downlink dedicated (BWP-DownlinkDedicated). In addition to the resource used for RLM, resources configured by a network side by using radioLinkMonitoringConfig include other resources, such as a resource used for BFD. For example, there are *N*_{LR-RLM} reference signal resources in radioLinkMonitoringConfig. For example, a maximum of *N*_{RLM} reference signal resources are used for RLM, and a maximum of two reference signal resources are used for BFD. Resources used for RLM and BFD may be the same or different. Values of *N*_{LR-RLM} and *N*_{RLM} are related to a maximum quantity of reference signals (for example, SSBs).

In addition, if no reference signal used for RLM (RadioLinkMonitoringRS) is configured for the terminal device, but a transmission configuration indication (transmission configuration indication, TCI) state (TCI state) of a physical downlink control channel (physical downlink control channel, PDCCH) includes one or more CSI-RSs, the terminal device may use these CSI-RSs to perform RLM. Specifically, which CSI-RSs are used to perform RLM may be all or a part of the CSI-RSs in a specific order agreed in a protocol. This is not limited herein.

Step 2: The terminal device calculates quality (or referred to as radio link quality (radio link quality)) based on each reference signal.

For example, a measurement metric (metric) (or referred to as a measurement quantity) includes at least one of the following: reference signal received power (reference signal received power, RSRP), reference signal received quality (reference signal received quality, RSRQ), or signal-to-noise ratio (signal-to-noise ratio, SNR).

When calculating the quality, the terminal device may perform calculation in a specific time period (for example, an evaluation period (evaluation period)). To achieve a good filtering effect, a plurality of samples (samples) are usually used (a specific quantity of samples to be used depends on implementation of the terminal device). If the reference signal is an SSB, the time period includes T_{Evaluate_out_SSB} and T_{Evaluate_in_SSB}. If the reference signal is a CSI-RS, the time period includes T_{Evaluate_out_CSI-RS} and T_{Evaluate_in_CSI-RS}.

Step 3: The terminal device compares the quality calculated based on each reference signal with a corresponding threshold (for example, Qₒᵤₜ and Qᵢₙ). Thresholds corresponding to different reference signals may have respective values. For example, for one terminal device, four parameters Q_{out_SSB}, Q_{in_SSB}, Q_{out_CSI-RS} and Q_{in_CSI-RS} may simultaneously exist. Q_{out_SSB} is used for comparison with quality calculated based on a reference signal in a T_{Evaluate_out_SSB} time period, Q_{in_SSB} is used for comparison with quality calculated based on a reference signal in a T_{Evaluate_in_SSB} time period, Q_{out_CSI-RS} is used for comparison with quality calculated based on a reference signal in a T_{Evaluate_out_CSI-RS} time period, and Q_{in_CSI-RS} is used for comparison with quality calculated based on a reference signal in a T_{Evaluate_in_CSI-RS} time period.

Step 4: A physical layer in the terminal device indicates out-of-synchronization (out-of-sync, OOS) or in-synchronization (in-sync, IS) to a radio resource control (radio resource control, RRC) layer based on a comparison result. Specifically, if quality of all reference signals is lower than a threshold (Qₒᵤₜ), OOS is indicated; if quality of at least one reference signal is higher than Qᵢₙ, IS is indicated; and in other cases, no indication may be sent.

The foregoing steps are examples for description. This is not limited in embodiments of this application.

### (2) Channel state information (channel state information, CSI) measurement

For example, the CSI measurement includes the following steps.

Step 1: The terminal device receives a reference signal.

Step 2: The terminal device measures the reference signal. For different cases (such as intra-frequency (intra-frequency) or inter-frequency (inter-frequency), different frequency ranges (frequency ranges), and different discontinuous reception (discontinuous reception, DRX) cycle (cycle) lengths), requirements on a measurement cycle are different. For this case, a measurement position in one cycle is not specified in a protocol.

Step 3: The terminal device reports a measurement result. Usually, the terminal device may report a CSI report (CSI report) through a physical uplink control channel (physical uplink control channel, PUCCH).

### (3) RRM measurement

For example, the RRM measurement (or may be referred to as cell measurement) includes serving cell (serving cell) measurement and neighbor cell (neighbor cell) measurement. For example, the neighbor cell measurement includes at least one of the following: intra-frequency measurement, inter-frequency measurement, and inter-radio access technology (inter-radio access technology, inter-RAT) measurement.

Similarly, the RRM measurement includes the following steps: The terminal device receives a reference signal. The terminal device measures the reference signal. The terminal device reports a measurement result.

The foregoing briefly describes some types of measurement, mainly some types of measurement when the terminal device is in the connected state. For different types of measurement, measurement requirements may be different, for example, measurement cycles may be different.

In the connected state, a service of the terminal device usually arrives more frequently than in the idle state. Therefore, the main circuit of the terminal device is turned on more frequently to receive and send data. To reduce complexity of a protocol design, in a possible implementation, the main circuit is used to perform some measurement behaviors in the connected state, for example, including but not limited to RLM, BFD, CSI measurement, or RRM measurement.

However, as described above, the wake-up circuit and the main circuit of the terminal device may not simultaneously receive signals. In this case, the terminal device cannot simultaneously use the wake-up circuit to receive a wake-up signal and use the main circuit to perform measurement (or use the main circuit to receive a reference signal used for measurement). In this case, the following case may occur: The network side sends a wake-up signal at a time domain position at which the terminal device performs measurement, and the terminal device may miss detection of the wake-up signal.

In view of this, this application provides a solution. A time domain position used for measurement is configured or defined, that is, the terminal device performs measurement at the time domain position, and the network device does not send a wake-up signal at the time domain position. In this manner, the terminal device and the network device may align a time domain position at which the terminal device performs measurement via the main circuit, to avoid missing detection of the wake-up signal.

Before the solutions of this application are described, the following descriptions are provided.
(1) In this application, an "indication" may include a direct indication, an indirect indication, an explicit indication, and an implicit indication. When a piece of indication information is described as indicating A, it may be understood as that the indication information carries A, directly indicates A, or indirectly indicates A.
   In this application, information indicated by the indication information is referred to as to-be-indicated information. In a specific implementation process, the to-be-indicated information may be indicated in many manners, for example but not limited to the following manners: The to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending, and sending periodicities and/or sending occasions of these pieces of sub-information may be the same or different.
(2) In this application, the expression "/" represents that associated objects are in an "or" relationship. For example, A/B may represent A or B. The expression "and/or" represents that associated objects may be in an association relationship of "and", or may be an association relationship of "or". For example, A and/or B may represent the following cases: Only A exists, only B exists, and both A and B exist, where A and B may be one or more. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and A, B, and C all exist. A, B, and C may be singular or plural.
(3) In this application, "sending" and "receiving" represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.
(4) In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
(5) In this application, "first" and "second" are merely for ease of description, and are used to distinguish objects, but are not intended to limit the scope of embodiments of this application, and are not used to describe an order or a sequence of features. It should be understood that, objects described in such a way are interchangeable in an appropriate circumstance, so that a solution other than embodiments of this application can be described.

The following describes in detail a method provided in embodiments of this application with reference to the accompanying drawings. Embodiments provided in this application may be applied to the scenario shown in the foregoing figure. This is not limited.

For example, FIG. 4 is a diagram of a signal transmission method 400 according to an embodiment of this application. For ease of description, the following uses an example in which the method 400 is performed by a terminal device for description. It may be understood that, the method 400 may alternatively be performed by a component, for example, a chip, a chip system, or a circuit, of the terminal device. This is not limited herein. A step described below as being performed by a single execution body may alternatively be performed by a plurality of execution bodies. These execution bodies may be logically and/or physically separated. The method 400 shown in FIG. 4 may include the following steps.

The method 400 includes step 420 and step 430. Optionally, the method 400 includes step 410.

410: The terminal device determines a time domain resource of a reference signal and a time domain resource of a wake-up signal.

For example, the reference signal is used for measurement. Specifically, the terminal device may perform measurement based on the reference signal, that is, the terminal device performs measurement based on the reference signal via a main circuit. For example, the measurement includes at least one of the following: RLM, BFD, channel measurement (for example, CSI measurement), RRM measurement (or may be referred to as cell measurement), beam measurement, or the like. For the foregoing measurement items, refer to related descriptions in the foregoing term explanation part. In addition, a specific measurement manner is not limited in this embodiment of this application.

The time domain resource of the reference signal indicates a time domain resource on which the reference signal can be received, or a time domain resource on which measurement can be performed.

The determining the time domain resource of the reference signal may alternatively be replaced with: determining a time domain resource not used for monitoring the wake-up signal.

For example, the wake-up signal is used to wake-up at least one terminal device. For the wake-up signal, refer to the foregoing related descriptions.

The determining the time domain resource of the wake-up signal may alternatively be replaced with: determining a time domain resource used for monitoring the wake-up signal.

For example, a modulation scheme of the wake-up signal is OOK modulation, and a modulation scheme of the reference signal is non-OOK modulation. For example, the modulation scheme of the reference signal is orthogonal frequency division multiplexing (orthogonal frequency division multiplexing, OFDM) modulation or discrete Fourier transformation-spread-orthogonal frequency division multiplexing (discrete Fourier transformation-spread-orthogonal frequency division multiplexing, DFT-s-OFDM) modulation.

That the modulation scheme of the wake-up signal is the OOK modulation may alternatively be replaced with: In a time interval corresponding to the wake-up signal, there is energy at some time domain positions, and there is no energy at some time domain positions; or energy at some time domain positions is greater than a first threshold, energy at some time domain positions is less than a second threshold, and the first threshold is greater than or equal to a second threshold; or the wake-up signal includes X OOK symbols, the X OOK symbols include X1 first symbols and X2 second symbols, signal amplitude of the first symbol is greater than or equal to a first threshold, and signal amplitude of the second symbol is less than or equal to a second threshold, where X is an integer greater than 0, X1 and X2 are integers greater than or equal to 0, and X1+X2=X. That the signal amplitude of the first symbol is greater than or equal to the first threshold, and the signal amplitude of the second symbol is less than or equal to the second threshold may be replaced with any one of the following: The signal amplitude of the first symbol is greater than the signal amplitude of the second symbol; in a preset time period, the signal amplitude of the first symbol is greater than the signal amplitude of the second symbol; signal power of the first symbol is greater than signal power of the second symbol; in a preset time period, signal power of the first symbol is greater than signal power of the second symbol; signal power of the first symbol is greater than or equal to the first threshold, and signal power of the second symbol is less than or equal to the second threshold; in a preset time period, signal power of the first symbol is greater than or equal to the first threshold, and signal power of the second symbol is less than or equal to the second threshold; a signal level value of the first symbol is greater than a signal level value of the second symbol; in a preset time period, a signal level value of the first symbol is greater than a signal level value of the second symbol; a signal level value of the first symbol is greater than or equal to the first threshold, and a signal level value of the second symbol is less than or equal to the second threshold; in a preset time period, a signal level value of the first symbol is greater than or equal to the first threshold, and a signal level value of the second symbol is less than or equal to the second threshold; or the first symbol indicates (or corresponds to, or represents) a first bit value, and the second symbol indicates (or corresponds to, or represents) a second bit value. The first bit value is different from the second bit value. For example, the first bit value is "1", and the second bit value is "0". For another example, the first bit value is "0", and the second bit value is "1".

420: The terminal device receives the reference signal on a part or all of the time domain resource of the reference signal.

The terminal device may be a terminal device in a connected state.

The time domain resource of the reference signal in step 410 is a time domain resource that may (or can) be used by the terminal device to receive the reference signal. During actual communication, the terminal device may receive the reference signal on a part of the time domain resource of the reference signal, or the terminal device may receive the reference signal on all of the time domain resource of the reference signal.

For example, the time domain resource of the reference signal includes N time domain units, where N is an integer greater than 1. The terminal device receives the reference signal in N1 of the N time domain units, where N1 is an integer greater than 0 or equal to 0, and N1 is less than or equal to N. It may be understood that, when N1=0, it indicates that the terminal device does not receive the reference signal on the time domain resource of the reference signal.

430: The terminal device monitors the wake-up signal on the time domain resource of the wake-up signal.

Optionally, the terminal device includes a first module and a second module. The terminal device monitors the wake-up signal via (or referred to as by using) the first module, and receives the reference signal via (or referred to as by using) the second module. Specifically, in step 420, the terminal device receives the reference signal on the part or all of the time domain resource of the reference signal via the second module; and in step 430, the terminal device monitors the wake-up signal on the time domain resource of the wake-up signal via the first module.

For example, power consumption of the first module may be less than power consumption of the second module. The first module may be, for example, the wake-up circuit in FIG. 2, or may be a receiving module of the wake-up circuit. The second module may be, for example, the main circuit in FIG. 2, or may be a receiving module of the main circuit. For the main circuit and the wake-up circuit, refer to the foregoing related descriptions. The following uses the main circuit and the wake-up circuit as an example for description.

The following describes related solutions of the time domain resource of the reference signal and the time domain resource of the wake-up signal. For example, the time domain resource of the reference signal and the time domain resource of the wake-up signal include the following three solutions.

Solution 1: A network device configures a time domain resource of a reference signal. The terminal device does not monitor the wake-up signal on the time domain resource of the reference signal. Correspondingly, the network device does not send the wake-up signal on the time domain resource of the reference signal. In view of this, the time domain resource of the reference signal in step 410 is the time domain resource of the reference signal configured by the network device. The time domain resource of the reference signal configured by the network device indicates that the network device sends the reference signal on the configured time domain resource of the reference signal. It should be noted that, for the terminal device, whether to receive the reference signal on the configured time domain resource depends on implementation of the terminal device, for example, a measurement requirement of the terminal device. For example, the terminal device may receive the reference signal on all of the time domain resource of the reference signal. For another example, the terminal device may receive the reference signal on a part of the time domain resource of the reference signal.

In this solution, the network device may configure, for the terminal device, the time domain resource of the reference signal used for measurement. In this way, the network device sends the reference signal on the time domain resource of the reference signal, and does not send the wake-up signal, and the terminal device may not monitor the wake-up signal on the time domain resource of the reference signal. In this way, the terminal device and the network device can align a time domain resource position for measurement, to avoid missing detection of the wake-up signal, and power consumption caused by the terminal device for monitoring the wake-up signal can be reduced.

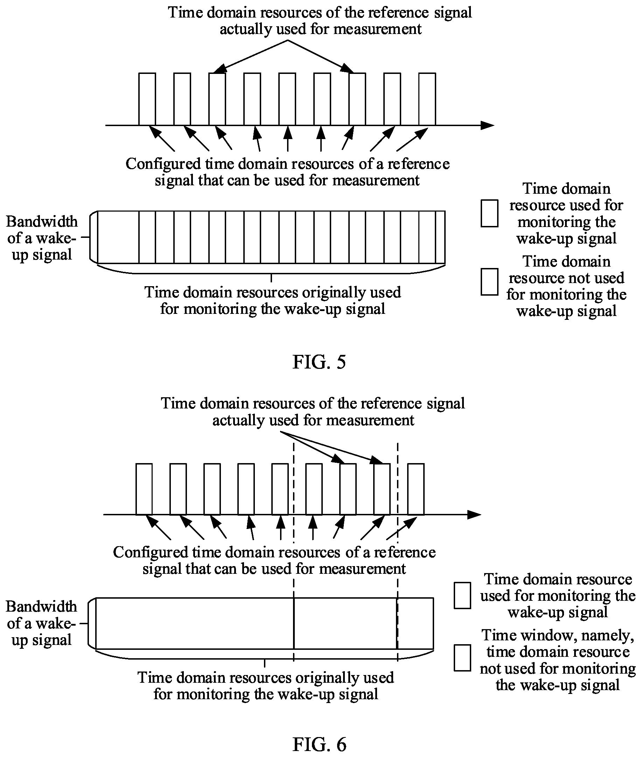

For example, FIG. 5 is a diagram of Solution 1 applicable to an embodiment of this application. As shown in FIG. 5, a network device configures, for a terminal device, a time domain resource of a reference signal (that is, the time domain resource of the reference signal in step 410) that can be used for measurement. For brevity, the time domain resource is referred to as a time domain resource #1. The network device does not send a wake-up signal on the time domain resource #1, and in a process of monitoring the wake-up signal, the terminal device does not monitor the wake-up signal on the time domain resource #1. Specifically, it may be assumed that the terminal device may perform measurement at a position of the time domain resource #1. Therefore, at the position of the time domain resource #1, the network device does not send the wake-up signal, and the terminal device does not monitor the wake-up signal. However, it can be learned from FIG. 5 that, for example, the terminal device actually receives the reference signal on a part of the time domain resource #1 for measurement, for example, time domain resources (that is, the part of the time domain resource of the reference signal in step 420) on which measurement is actually performed in FIG. 5.

"Time domain resources originally used for monitoring the wake-up signal" shown in FIG. 5 include at least the following two cases.

In a possible case, the "time domain resources originally used for monitoring the wake-up signal" shown in FIG. 5 are all time domain resources used for monitoring the wake-up signal. For example, the terminal device performs continuous monitoring on the wake-up signal on the time domain resources originally used for monitoring the wake-up signal shown in FIG. 5. Based on Solution 1, the terminal device stops monitoring the wake-up signal (or no longer monitors the wake-up signal) on the time domain resource #1, and may continue to monitor the wake-up signal on another time domain resource.

In another possible case, the "time domain resources originally used for monitoring the wake-up signal" shown in FIG. 5 are a part of all the time domain resources used for monitoring the wake-up signal. For example, the terminal device performs duty cycle (duty cycle) monitoring on the wake-up signal on the time domain resources originally used for monitoring the wake-up signal shown in FIG. 5. For another example, the network device configures a plurality of time domain resources for the wake-up signal, and the plurality of time domain resources include the "time domain resources originally used for monitoring the wake-up signal" shown in FIG. 5. Based on Solution 1, the terminal device stops monitoring the wake-up signal (or no longer monitors the wake-up signal) on the time domain resource #1, and may continue to monitor the wake-up signal on another time domain resource.

Based on Solution 1, further optionally, the method 400 further includes: The terminal device receives configuration information, where the configuration information includes information about the time domain resource of the reference signal.

For example, the configuration information may be carried in radio resource control (radio resource control, RRC) signaling.

For example, the information about the time domain resource of the reference signal includes at least one of the following information: a start position of the reference signal in time domain, an end position of the reference signal in time domain, a time domain length of the reference signal in time domain (for example, a quantity of time domain units occupied by the reference signal), or an index of the time domain unit occupied by the reference signal.

Solution 2: At least one time domain resource is configured or defined, and on the at least one time domain resource, the terminal device receives the reference signal and does not monitor the wake-up signal. In view of this, the time domain resource of the reference signal in step 410 is the at least one time domain resource.

In this solution, the terminal device may perform measurement on centralized time domain resources, to reduce a quantity of switching times of the main circuit/wake-up circuit (or sleep/wake-up) of the terminal device, thereby reducing power consumption of the terminal device.

The at least one time domain resource may be in a form of a time window, a form of a time domain unit, or a form of a time domain length. This is not limited herein. The following uses the time window as an example to describe two implementations.

In a first possible implementation, the time domain resource of the reference signal in step 410 includes at least one time window. In view of this, in step 420, the terminal device receives the reference signal on a part or all of a time domain resource in the at least one time window. Further, the terminal device does not monitor the wake-up signal in the at least one time window. In addition, the network device does not send the wake-up signal in the at least one time window.

For example, FIG. 6 is a diagram of Solution 2 applicable to an embodiment of this application. As shown in FIG. 6, a terminal device may receive a reference signal in a time window, and in a process of monitoring a wake-up signal, the terminal device does not monitor the wake-up signal in the time window. In addition, it can be learned from FIG. 6 that, actually, for example, the terminal device receives the reference signal at two time domain positions (that is, time domain resources of the reference signal actually used for measurement shown in FIG. 6) in the time window and performs measurement. For example, FIG. 6 shows one time window. It may be understood that, there may be a plurality of time windows in practice. The plurality of time windows may be discontinuous. For example, the plurality of time windows may be periodic, that is, time intervals between every two adjacent time windows in the plurality of time windows may be the same.

In a second possible implementation, the time domain resource of the reference signal in step 410 includes a part of a time domain resource in at least one time window (for differentiation, the part of the time domain resource is referred to as a first time domain resource). In view of this, in step 420, the terminal device may receive the reference signal on a part or all of the first time domain resource. The first time domain resource is a time domain resource configured for the reference signal, that is, the first time domain resource is a time domain resource on which the reference signal is transmitted, that is, the network device sends the reference signal on the first time domain resource. During actual communication, the terminal device may receive the reference signal on a part of the first time domain resource, or may receive the signal on all of the first time domain resource.

Further, the terminal device does not monitor the wake-up signal on the first time domain resource in the at least one time window. In other words, in the at least one time window, the terminal device monitors the wake-up signal on a time domain resource other than the first time domain resource. In addition, in the at least one time window, the network device does not send the wake-up signal on the first time domain resource in the at least one time window.

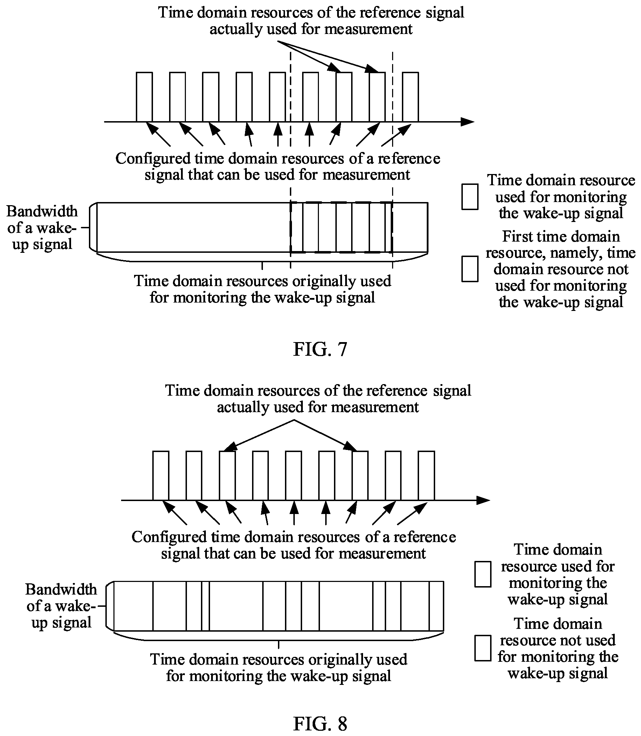

For example, FIG. 7 is another diagram of Solution 2 applicable to an embodiment of this application. As shown in FIG. 7, in one time window, a first time domain resource includes three positions, and in a process of monitoring a wake-up signal, a terminal device does not monitor the wake-up signal at the three positions. The terminal device may monitor the wake-up signal at another position in the time window. In addition, the terminal device may receive a reference signal at the three positions, and it can be learned from FIG. 7 that, the terminal device actually receives the reference signal at two of the three positions (that is, time domain resources of the reference signal actually used for measurement shown in FIG. 7) and performs measurement based on the reference signal. For example, FIG. 7 shows one time window. It may be understood that, there may be a plurality of time windows in practice. In addition, for example, FIG. 7 shows a case in which the first time domain resource includes three discontinuous time domain resources. This is not limited herein. In practice, the first time domain resource may be continuous, or the first time domain resource may include more or fewer discontinuous time domain resources.

For the time domain resources that are originally used for monitoring the wake-up signal and that are of the terminal device in FIG. 6 and FIG. 7, refer to related descriptions in Solution 1. Details are not described herein again.

The following describes a related solution of the at least one time domain resource (namely, the time window) mentioned in Solution 2. The following uses the time window as an example to describe two implementations.

In a first possible implementation, the time window is configured by the network device.

Based on this manner, optionally, the method 400 further includes: The terminal device receives first indication information, where the first indication information indicates the at least one time window.

Optionally, the first indication information includes at least one of the following: a start position of the at least one time window, a start position of one of the at least one time window, an end position of the at least one time window, an end position of one of the at least one time window, a length of the at least one time window, a length of one of the at least one time window, a time interval between two adjacent time windows in the at least one time window, or an offset. The offset represents an offset between the at least one time window and connected discontinuous reception (connected DRX, CDRX). The following briefly describes several examples.

Example 1: The first indication information includes the start position of one of the at least one time window.

For example, the first indication information includes a start position of a 1^{st} time window in the at least one time window. In this case, the terminal device may learn of a start position of each time window based on the start position of the 1^{st} time window and an interval between time windows. The interval between the time windows may be predefined, or may be carried in the first indication information.

Example 2: The first indication information includes the end position of one of the at least one time window.

Example 2 is similar to Example 1. Details are not described herein again.

Example 3: The first indication information includes the length of one of the at least one time window.

For example, it may be assumed (for example, predefined, or indicated by the first indication information) that lengths of time windows are the same, so that the first indication information needs to indicate a length of only one time window.

Example 4: The first indication information includes the offset.

For example, the offset includes at least one of the following: an offset between the start position of the at least one time window and a start position of CDRX on duration (OnDuration), an offset between the start position of the at least one time window and an end position of the CDRX OnDuration, an offset between the start position of the at least one time window and a middle position of the CDRX OnDuration, an offset between the start position of any one of the at least one time window and the start position of the CDRX OnDuration, an offset between the start position of any one of the at least one time window and the end position of the CDRX OnDuration, or an offset between the start position of any one of the at least one time window and the middle position of the CDRX OnDuration.

In a second possible implementation, the time window is predefined.

Based on this manner, optionally, the method 400 further includes: The terminal device determines the at least one time window.

For example, it may be predefined that a frame in a frame index mode X (frame_index mode X)=1 or 2, that is, first two frames in every X frames, is a position at which the terminal device can perform measurement in a process of monitoring the wake-up signal, that is, the at least one time window is the first two frames in the every X frames. X is an integer greater than 0, for example, X=20. "1" and "2" represent indexes of the frame, and the index of the frame may alternatively be another value.

For another example, it may be predefined that a position at which the terminal device can perform measurement in a process of monitoring the wake-up signal is in the CDRX OnDuration, that is, the at least one time window is the CDRX OnDuration. Alternatively, it may be predefined that a start position of the CDRX OnDuration is used as a reference, and a time position whose length is L (for example, 20 ms) is a position at which the terminal device can perform measurement in a process of monitoring the wake-up signal, that is, a start position of the at least one time window is the start position of the CDRX OnDuration, and a length is L. L is a number greater than 0.

For information about the time window, refer to descriptions in the first possible implementation. Details are not described herein again.

Solution 3: The network device configures or predefines the time domain resource of the wake-up signal, and the terminal device receives the reference signal on a time domain resource other than the time domain resource of the wake-up signal. In view of this, the time domain resource of the reference signal in step 410 is a time domain resource different from the time domain resource of the wake-up signal, or a time domain resource other than the time domain resource of the wake-up signal. Specifically, if the network device needs to send the wake-up signal, the network device sends the wake-up signal on the time domain resource of the wake-up signal, and does not send the wake-up signal on a time domain resource other than the time domain resource of the wake-up signal. Correspondingly, the terminal device monitors the wake-up signal on the time domain resource of the wake-up signal, and does not monitor the wake-up signal on another time domain resource. In addition, if the network device needs to send the reference signal (or to configure the time domain resource of the reference signal), the network device sends the reference signal on a time domain resource other than the time domain resource of the wake-up signal, or configures the time domain resource of the reference signal on a time domain resource other than the time domain resource of the wake-up signal. Correspondingly, the terminal device receives the reference signal on the time domain resource other than the time domain resource of the wake-up signal.

In this solution, the terminal device and the network device align a time domain resource position for measurement, to avoid missing detection of the wake-up signal.

For example, FIG. 8 is a diagram of Solution 3 applicable to an embodiment of this application. As shown in FIG. 8, it is assumed that a network device configures, for a terminal device, a time domain resource used for monitoring a wake-up signal, and the terminal device monitors the wake-up signal on the time domain resource of the wake-up signal, and does not monitor the wake-up signal on a time domain resource other than the time domain resource of the wake-up signal. When performing measurement based on a reference signal, the terminal device receives, on the time domain resource other than the time domain resource of the wake-up signal, the reference signal used for measurement.

For example, the time domain resource used for monitoring the wake-up signal shown in FIG. 8 may be a part of all time domain resources used for monitoring the wake-up signal. For example, the terminal device monitors the wake-up signal in a duty cycle manner. The time domain resource used for monitoring the wake-up signal shown in FIG. 8 is a time domain position for periodically monitoring the wake-up signal.

Based on Solution 3, the determining the time domain resource of the reference signal and the time domain resource of the wake-up signal in step 410 may alternatively be replaced with: determining the time domain resource of the wake-up signal. After the time domain resource of the wake-up signal is determined, the time domain resource of the reference signal may also be directly determined, that is, the time domain resource of the reference signal is a time domain resource other than the time domain resource of the wake-up signal, or the time domain resource of the reference signal is a time domain resource different from the time domain resource of the wake-up signal. In this case, the "time domain resource of the reference signal" is a position at which the reference signal can be received. In other words, this embodiment of this application does not limit sending of the reference signal at all positions on the "time domain resource of the reference signal", and does not limit the terminal device to receive the reference signal at all the positions. That is, if the network device needs to send the reference signal, the network device may send the reference signal by using a time domain resource in the "time domain resource of the reference signal"; or if the terminal device needs to receive the reference signal, the terminal device may receive the reference signal by using a time domain resource in the "time domain resource of the reference signal".

In Solution 3, that the time domain resource of the reference signal is the time domain resource other than the time domain resource of the wake-up signal may be predefined or may be configured. This is not limited herein. For example, a protocol may define a position at which the terminal device performs measurement other than the time domain resource of the wake-up signal.

Optionally, the time domain resource of the wake-up signal is discontinuous. In other words, the wake-up signal includes a plurality of time domain units in time domain, and at least two of the plurality of time domain units are discontinuous. For example, the discontinuous time domain resource of the wake-up signal may be combined with Solution 3. Solution 3 is used as an example. As shown in FIG. 8, the time domain resources of the wake-up signal are discontinuous.

Further, optionally, intervals between every two adjacent continuous time domain resources are the same or different. For example, the time domain resource of the wake-up signal includes M groups of time domain units, each group of time domain units includes at least one time domain unit, time domain units in each group of time domain units are continuous, and intervals between two adjacent groups of time domain units in the M groups of time domain units are the same or different.

In a possible implementation, the time domain resource of the wake-up signal is periodic. In view of this, the terminal device may periodically monitor the wake-up signal.

Further, optionally, the method 400 further includes: The terminal device sends second indication information to the network device, where the second indication information indicates an expected time domain resource of the terminal device, that is, a time domain resource that is expected by the terminal device for transmission of the reference signal and that is indicated by the second indication information. In view of this, the terminal device may report expected measurement time to the network device.

Solution 2 is used as an example. The network device may determine the at least one time window based on the measurement time domain resource expected by the terminal device in the second indication information. In this way, the configured at least one time window can better meet a requirement of the terminal device.

The foregoing describes the related solutions of the time domain resource of the wake-up signal and the time domain resource of the reference signal. It should be noted that, for a time domain resource of another signal monitored (or received) by the wake-up circuit, also refer to a related design of the time domain resource of the wake-up signal in the method 400.

For example, the method 400 may also be transformed into: In step 410, the terminal device determines a time domain resource of a reference signal and a time domain resource of a first-type signal. In step 420, the terminal device receives the reference signal on a part or all of the time domain resource of the reference signal. In step 430, the terminal device monitors (or receives) the first-type signal on the time domain resource of the first-type signal. The first-type signal includes a wake-up signal and/or a synchronization signal (for example, an LP-SS).

For another example, the method 400 may also be transformed into: In step 410, the terminal device determines a time domain resource of a second-type signal and a time domain resource of a first-type signal. In step 420, the terminal device receives the second-type signal on a part or all of the time domain resource of the second-type signal. In step 430, the terminal device monitors (or receives) the first-type signal on the time domain resource of the first-type signal. The first-type signal includes a wake-up signal and/or a synchronization signal (for example, an LP-SS), and the second-type signal includes a reference signal.

The first-type signal and the second-type signal are described in detail below.

Optionally, the terminal device sends capability information to the network device, where the capability information indicates whether the first-type signal and the second-type signal can be simultaneously received (or whether simultaneous receiving of the first-type signal and the second-type signal can be supported). That the terminal device may send the capability information to the network device may be used in combination with the method 400, or may be used independently. This is not limited herein. For example, when used in combination, the indication information may indicate that the terminal device cannot simultaneously receive the first-type signal and the second-type signal. In this way, when the terminal device cannot simultaneously receive the first-type signal and the second-type signal, the terminal device may receive the reference signal and monitor the wake-up signal in the manner described in the method 400.

Optionally, the terminal device includes a first module and a second module. That the indication information indicates whether the first-type signal and the second-type signal can be simultaneously received may alternatively be replaced with: The indication information indicates whether the first module (for example, a wake-up circuit) and the second module (for example, a main circuit) can simultaneously receive signals. For the first module and the second module, refer to the foregoing descriptions. Details are not described herein again. The following uses the wake-up circuit and the main circuit as an example for description.

Optionally, OOK modulation is used for the first-type signal, and non-OOK modulation is used for the second-type signal. For example, a modulation scheme of the second-type signal is OFDM or DFT-s-OFDM.

Optionally, the first-type signal includes a wake-up signal and/or a synchronization signal (for example, an LP-SS).

Optionally, the second-type signal is a signal that is different from the wake-up signal and the synchronization signal. The second-type signal may represent, for example, various downlink signals in an NR system. For example, the first-type signal includes any one or more of the following: an SSB, a PDCCH, a physical downlink shared channel (physical downlink shared channel, PDSCH), a CSI-RS, a phase tracking reference signal (phase tracking reference signal, PTRS), a positioning reference signal (positioning reference signal, PRS), and a demodulation reference signal (demodulation reference signal, DMRS).

Optionally, the capability information is per band (per band), or the capability information is associated with the band; or the capability information is per band combination (per band combination), or the capability information is associated with the band combination. In view of this, different bands or band combinations may have respective capability information, and the capability information may be reported for different bands or band combinations. The band combination may alternatively be replaced with another description, for example, a band group. A name thereof does not limit the protection scope of embodiments of this application. The following provides descriptions with reference to two cases.

In a first possible case, the capability information is per band combination, or the capability information is associated with the band combination.

For example, the capability information and the band combination may exist in a form of a table, a function, text, or a character string, for example, may be stored or transmitted. Table 1 is an example of presenting the capability information and the band combination in a form of a table.

**Table 1**

| Band combination | Capability information |
|---|---|
| Band #1 and band #2 | The first-type signal and the second-type signal can be simultaneously received |
| Band #3 and band #4 | The first-type signal and the second-type signal cannot be simultaneously received |

Table 1 is used as an example. If the wake-up circuit and the main circuit of the terminal device respectively operate in the band #1 and the band #2, for example, the wake-up circuit operates in the band #1 and the main circuit operates in the band #2, or for another example, the wake-up circuit operates in the band #2 and the main circuit operates in the band #1, the terminal device can simultaneously receive the first-type signal and the second-type signal, that is, the terminal device can simultaneously receive signals via the main circuit and the wake-up circuit. If the wake-up circuit and the main circuit of the terminal device respectively operate in the band #3 and the band #4, for example, the wake-up circuit operates in the band #3, and the main circuit operates in the band #4, or for another example, the wake-up circuit operates in the band #4, and the main circuit operates in the band #1, the terminal device cannot simultaneously receive the first-type signal and the second-type signal, that is, the terminal device cannot simultaneously receive signals via the main circuit and the wake-up circuit.

That the main circuit operates in the band #1 indicates that a frequency at which a signal is received via the main circuit is the band #1. Similarly, that the wake-up circuit operates in the band #2 indicates that a frequency at which a signal is received via the wake-up circuit is the band #2. This is not explained below.

It may be understood that, Table 1 is an example for description. This is not limited herein. For example, more band combinations may be included. For another example, the band combination may include more bands.

In this case, the capability information reported by the terminal device may be capability information of a band combination or capability information of some band combinations. Table 1 is used as an example. The terminal device may report capability information associated with a band combination of the band #1 and the band #2, and/or the terminal device may report capability information associated with a band combination of the band #3 and the band #4. In addition, the reported capability information may carry the capability information and information about the associated band combination (for example, an identifier of the associated band combination); or may directly carry the capability information. In this case, it may be considered by default that a network side (for example, the network device) knows which band combination is associated with the capability information.

In a second possible case, the capability information is per band, or the capability information is associated with the band. In this case, it may be considered by default or predefined that the main circuit and the wake-up circuit operate in a same band.

For example, the capability information and the band may exist in a form of a table, a function, text, or a character string, for example, may be stored or transmitted. Table 2 is an example of presenting the capability information and the band in a form of a table.

**Table 2**

| Band | Capability information |
|---|---|
| Band #1 | The first-type signal and the second-type signal can be simultaneously received |
| Band #2 | The first-type signal and the second-type signal can be simultaneously received |
| Band #3 | The first-type signal and the second-type signal cannot be simultaneously received |

Table 2 is used as an example. If the terminal device operates in the band #1 or the band #2, that is, a frequency of a signal is the band #1 or the band #2, the terminal device can simultaneously receive the first-type signal and the second-type signal, that is, the terminal device can simultaneously receive signals via the main circuit and the wake-up circuit. If the terminal device operates in the band #3, that is, a frequency of a signal is the band #3, the terminal device cannot simultaneously receive the first-type signal and the second-type signal, that is, the terminal device cannot simultaneously receive signals via the main circuit and the wake-up circuit.

It may be understood that, Table 2 is an example for description. This is not limited herein. For example, more bands may be included. For another example, bands at which the first-type signal and the second-type signal can be simultaneously received may be listed together, and bands at which the first-type signal and the second-type signal cannot be simultaneously received may be listed together.

In this case, the capability information reported by the terminal device may be capability information of a band (for example, a band supported by the terminal device), or capability information of some bands (for example, some bands supported by the terminal device). Table 2 is used as an example. The terminal device may report capability information associated with at least one of the following bands: the band #1, the band #2, or the band #3. In addition, the reported capability information may carry the capability information and information about the associated band (for example, an identifier of the associated band); or may directly carry the capability information, and in this case, it may be considered by default that a network side (for example, the network device) knows which band is associated with the capability information; or may directly carry the information about the band, and in this case, it may be considered by default that the network side knows the capability information of the band.

It may be understood that, the foregoing uses the band and the band combination as examples for description. This is not limited herein. For example, the band may be also replaced with another frequency domain unit.

It may be understood that, in embodiments of this application, "receiving" may alternatively be replaced with "detecting", "reading", or "monitoring". For example, "receiving a reference signal" may alternatively be replaced with "detecting a reference signal", "reading a reference signal", or "monitoring a reference signal".

It may be further understood that, in some of the foregoing embodiments, the main circuit and the wake-up circuit are mainly used as examples for descriptions. This application is not limited thereto. For example, the "wake-up circuit" may alternatively be replaced with a "first module", or may be replaced with a "wake-up link", or may be replaced with "in a first state", or may be replaced with "in a first mode". For example, "the terminal device receives a signal via a wake-up circuit" may alternatively be replaced with "the terminal device receives a signal via a first module or the terminal device receives a signal on a wake-up link". The "main circuit" may alternatively be replaced with a "second module", or may be replaced with a "main link", or may be replaced with "in a second state", or may be replaced with "in a second mode". For example, "the terminal device receives a signal via a main circuit" may alternatively be replaced with "the terminal device receives a signal via a second module or the terminal device receives a signal on a main link".

It may be further understood that, in some of the foregoing embodiments, "transmission" is mentioned. Unless otherwise specified, transmission includes receiving and/or sending. For example, performing transmission of a signal may include receiving a signal and/or sending a signal.

It may be further understood that, in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be further understood that, in some of the foregoing embodiments, signal sending is mentioned for a plurality of times. For example, A sends a signal to B. That A sends the signal to B may include that A directly sends the signal to B, or may include that A sends the signal to B via another device or network element. This is not limited herein.

It may be further understood that, in some of the foregoing embodiments, predefinition is mentioned for a plurality of times, and represents predefinition in a standard protocol, or may represent pre-agreement or pre-negotiation between devices.

It may be further understood that, some optional features in embodiments of this application may be independent of other features in some scenarios, or may be combined with other features in some scenarios. This is not limited.

It may be further understood that, in the foregoing method embodiments, the method and the operation implemented by the terminal device may alternatively be implemented by a component (for example, a chip or a circuit) of the terminal device. In addition, the method and the operation implemented by the network device may alternatively be implemented by a component (for example, a chip or a circuit) of the network device. This is not limited.

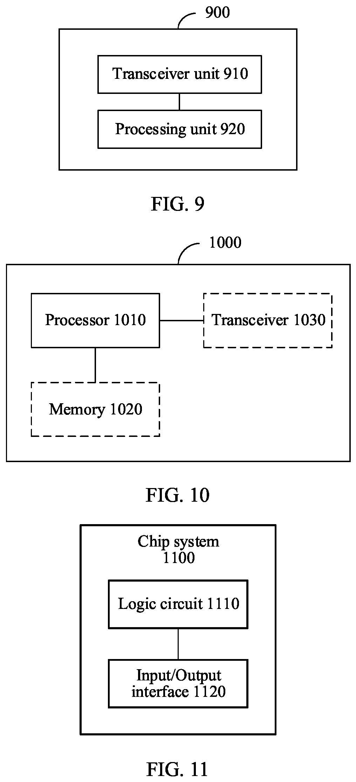

The foregoing describes in detail the methods provided in embodiments of this application with reference to FIG. 4 to FIG. 8. The following describes in detail apparatuses provided in embodiments of this application with reference to FIG. 9 to FIG. 11. It should be understood that, descriptions of apparatus embodiments correspond to descriptions of method embodiments. Therefore, for content that is not described in detail, refer to the foregoing method embodiments. For brevity, details are not described herein again.

For example, FIG. 9 is a diagram of a communication apparatus 900 according to an embodiment of this application. The apparatus 900 includes a transceiver unit 910 and a processing unit 920. The transceiver unit 910 may be configured to implement a corresponding communication function. The transceiver unit 910 may also be referred to as a communication interface or a communication unit. The processing unit 920 may be configured to perform processing, for example, determine a time domain resource, or perform measurement.

Optionally, the apparatus 900 may further include a storage unit. The storage unit may be configured to store instructions and/or data. The processing unit 920 may read the instructions and/or the data in the storage unit, so that the apparatus implements the foregoing method embodiments.

Optionally, the transceiver unit 910 may include a receiving unit and a sending unit. The receiving unit may be configured to perform a receiving-related operation (for example, an operation of receiving data or a message), and the sending unit may be configured to perform a sending-related operation (for example, an operation of sending data or a message).

In a first possible design, the apparatus 900 may be the terminal device in the foregoing embodiments, and the apparatus 900 may implement steps or procedures performed by the terminal device in the foregoing method embodiments. The transceiver unit 910 may be configured to perform a receiving/sending-related operation (for example, an operation of sending and/or receiving data or a message) of the terminal device in the foregoing method embodiments. For example, the transceiver unit 910 may be configured to perform step 420 and step 430 in the embodiment shown in FIG. 4. The processing unit 920 may be configured to perform a processing-related operation of the terminal device in the foregoing method embodiments, or an operation other than sending and receiving (for example, an operation other than sending and/or receiving data or a message). For example, the processing unit 920 may be configured to perform step 410 in the embodiment shown in FIG. 4.

In a possible implementation, the processing unit 920 is configured to determine a time domain resource of a reference signal and a time domain resource of a wake-up signal. The transceiver unit 910 is configured to receive the reference signal on a part or all of the time domain resource of the reference signal. The transceiver unit 910 is further configured to monitor the wake-up signal on the time domain resource of the wake-up signal.

In a second possible design, the apparatus 900 may be the network device in the foregoing embodiments, and the apparatus 900 may implement steps or procedures performed by the network device in the foregoing method embodiments. The transceiver unit 910 may be configured to perform a receiving/sending-related operation (for example, an operation of sending and/or receiving data or a message) of the network device in the foregoing method embodiments. For example, the transceiver unit 910 may be configured to perform step 420 and step 430 in the embodiment shown in FIG. 4. The processing unit 920 may be configured to perform a processing-related operation of the network device in the foregoing method embodiments, or an operation other than sending and receiving (for example, an operation other than sending and/or receiving data or a message). For example, the processing unit 920 may be configured to determine a time domain resource of a reference signal and/or a time domain resource of a wake-up signal.

In a possible implementation, the processing unit 920 is configured to determine a time domain resource of a reference signal and a time domain resource of a wake-up signal. The transceiver unit 910 is configured to send the reference signal on a part or all of the time domain resource of the reference signal. The transceiver unit 910 is further configured to send the wake-up signal on a part or all of the time domain resource of the wake-up signal.

It should be understood that, a specific process in which the units perform the foregoing corresponding steps is described in detail in the foregoing method embodiments. For brevity, details are not described herein again.

It should be further understood that, the apparatus 900 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component supporting the described function. In an optional example, a person skilled in the art may understand that the apparatus 900 may be specifically the communication apparatus in the foregoing embodiments, and may be configured to perform procedures and/or steps corresponding to the communication apparatus in the foregoing method embodiments. To avoid repetition, details are not described herein again.

The apparatus 900 in the foregoing solutions has a function of implementing corresponding steps performed by the communication apparatus in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform receiving and sending operations and related processing operations in the method embodiments.

In addition, the transceiver unit 910 may alternatively be a transceiver circuit (which may include, for example, a receiving circuit and a sending circuit), and the processing unit may be a processing circuit.

It should be noted that the apparatus in FIG. 9 may be the communication device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

For example, FIG. 10 is a diagram of another communication apparatus 1000 according to an embodiment of this application. The apparatus 1000 includes a processor 1010. The processor 1010 is coupled to a memory 1020. The memory 1020 is configured to store a computer program or instructions and/or data. The processor 1010 is configured to: execute the computer program or the instructions stored in the memory 1020, or read the data stored in the memory 1020, to perform the method in the foregoing method embodiments.

Optionally, there are one or more processors 1010.

Optionally, there are one or more memories 1020.

Optionally, the memory 1020 and the processor 1010 are integrated together, or are disposed separately.

Optionally, as shown in FIG. 10, the apparatus 1000 further includes a transceiver 1030, and the transceiver 1030 is configured to receive and/or send a signal. For example, the processor 1010 is configured to control the transceiver 1030 to receive and/or send the signal.

For example, the processor 1010 may have a function of the processing unit 920 shown in FIG. 9, the memory 1020 may have a function of the storage unit, and the transceiver 1030 may have a function of the transceiver unit 910 shown in FIG. 9.

In a solution, the apparatus 1000 is configured to implement operations performed by the communication apparatus in the foregoing method embodiments.

For example, the processor 1010 is configured to execute the computer program or the instructions stored in the memory 1020, to implement related operations of the terminal device or the network device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

For example, FIG. 11 is a diagram of a chip system 1100 according to an embodiment of this application. The chip system 1100 (or may be referred to as a processing system) includes a logic circuit 1110 and an input/output interface (input/output interface) 1120.

The logic circuit 1110 may be a processing circuit in the chip system 1100. The logic circuit 1110 may be coupled to and connected to a storage unit, and invoke instructions in the storage unit, so that the chip system 1100 can implement methods and functions in embodiments of this application. The input/output interface 1120 may be an input/output circuit in the chip system 1100, and outputs information processed by the chip system 1100, or inputs to-be-processed data or signaling information into the chip system 1100 for processing.

Optionally, the logic circuit 1110 may be implemented by one or more processors, including the one or more processors or a processing part of the one or more processors.

Optionally, the input/output interface 1120 may include a transceiver circuit, a transceiver, an input/output circuit, or a communication interface.

In a solution, the chip system 1100 is configured to implement operations performed by the communication apparatus (for example, the terminal device or the network device) in the foregoing method embodiments.

For example, the logic circuit 1110 is configured to implement processing-related operations performed by the communication apparatus (for example, the terminal device or the network device) in the foregoing method embodiments, and the input/output interface 1120 is configured to implement sending and/or receiving-related operations performed by the communication apparatus (for example, the terminal device or the network device) in the foregoing method embodiments.

An embodiment of this application further provides a computer-readable storage medium. The computer-readable storage medium stores computer instructions for implementing the method performed by the communication apparatus (for example, the terminal device or the network device) in the foregoing method embodiments.

For example, when a computer program is executed by a computer, the computer is enabled to implement the method performed by the communication apparatus (for example, the terminal device or the network device) in the foregoing method embodiments.

An embodiment of this application further provides a computer program product, including instructions. When the instructions are executed by a computer, the method performed by the communication apparatus (for example, the terminal device or the network device) in the foregoing method embodiments is implemented.

An embodiment of this application further provides a communication system. The communication system includes the transmit end device and the receive end device in the foregoing method embodiments. For example, the system includes the terminal device and the network device in FIG. 4.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When the software is used for implementation, all or a part of embodiments may be implemented in a form of a computer program product. The computer program product includes one or more computer instructions. When the computer program instructions are loaded and executed on a computer, all or a part of procedures or functions in embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium includes but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
determining a time domain resource of a reference signal and a time domain resource of a wake-up signal;
receiving the reference signal on a part or all of the time domain resource of the reference signal; and
monitoring the wake-up signal on the time domain resource of the wake-up signal.

2. The method according to claim 1, wherein the reference signal is a signal used for measurement, and the wake-up signal is used to wake-up at least one terminal device.

3. The method according to claim 1 or 2, wherein the method further comprises:
sending at least one piece of capability information, wherein each of the at least one piece of capability information indicates whether a first-type signal and a second-type signal can be simultaneously received, the first-type signal comprises the wake-up signal, the second-type signal comprises the reference signal, on-off-keying OOK modulation is used for the first-type signal, and non-OOK modulation is used for the second-type signal.

4. The method according to claim 3, wherein one of the at least one piece of capability information is per band or per band combination.

5. The method according to claim 3 or 4, wherein the method further comprises:
receiving the first-type signal via a wake-up circuit, and receiving the second-type signal via a main circuit.

6. The method according to any one of claims 1 to 5, wherein the method further comprises:
skipping monitoring the wake-up signal on the time domain resource of the reference signal.

7. The method according to any one of claims 1 to 6, wherein the determining the time domain resource of the reference signal comprises:
receiving configuration information, wherein the configuration information comprises information about the time domain resource of the reference signal.

8. The method according to any one of claims 1 to 5, wherein
the time domain resource of the reference signal comprises at least one time window; or
the time domain resource of the reference signal comprises a first time domain resource in the at least one time window, and the first time domain resource is a time domain resource on which the reference signal is transmitted.

9. The method according to claim 8, wherein
the time domain resource of the reference signal comprises the at least one time window, and the method further comprises: skipping monitoring the wake-up signal in the at least one time window; or
the time domain resource of the reference signal comprises the first time domain resource in the at least one time window, and the method further comprises:
skipping monitoring the wake-up signal on the first time domain resource, and/or monitoring the wake-up signal on a time domain resource in the at least one time window other than the first time domain resource.

10. The method according to claim 8 or 9, wherein the method further comprises:
receiving first indication information, wherein the first indication information indicates the at least one time window.

11. The method according to claim 8 or 9, wherein the at least one time window is predefined.

12. The method according to any one of claims 1 to 5, wherein
the time domain resource of the reference signal is different from the time domain resource of the wake-up signal; or
the time domain resource of the reference signal is a resource other than the time domain resource of the wake-up signal.

13. The method according to any one of claims 1 to 12, wherein
the receiving the reference signal on the part or all of the time domain resource of the reference signal comprises:
receiving the reference signal on the part or all of the time domain resource of the reference signal via the main circuit; and
the monitoring the wake-up signal on the time domain resource of the wake-up signal comprises:
monitoring the wake-up signal on the time domain resource of the wake-up signal via the wake-up circuit.

14. The method according to any one of claims 1 to 13, wherein the method further comprises:
sending second indication information, wherein the second indication information indicates a time domain resource that is expected by the terminal device for transmission of the reference signal.

15. A signal transmission method, comprising:
determining a time domain resource of a reference signal and a time domain resource of a wake-up signal;
sending the reference signal on a part or all of the time domain resource of the reference signal; and
sending the wake-up signal on a part or all of the time domain resource of the wake-up signal.

16. The method according to claim 15, wherein the reference signal is a signal used for measurement, and the wake-up signal is used to wake-up at least one terminal device.

17. The method according to claim 15 or 16, wherein the method further comprises:
receiving at least one piece of capability information, wherein each of the at least one piece of capability information indicates whether a first-type signal and a second-type signal can be simultaneously received, the first-type signal comprises the wake-up signal, the second-type signal comprises the reference signal, on-off-keying OOK modulation is used for the first-type signal, and non-OOK modulation is used for the second-type signal.

18. The method according to claim 17, wherein one of the at least one piece of capability information is per band or per band combination.

19. The method according to claim 17 or 18, wherein the method further comprises:
sending the first-type signal via a wake-up circuit, and sending the second-type signal via a main circuit.

20. The method according to any one of claims 15 to 19, wherein the method further comprises:
skipping sending the wake-up signal on the time domain resource of the reference signal.

21. The method according to any one of claims 15 to 20, wherein the method further comprises:
sending configuration information, wherein the configuration information comprises information about the time domain resource of the reference signal.

22. The method according to any one of claims 15 to 19, wherein
the time domain resource of the reference signal comprises at least one time window; or
the time domain resource of the reference signal comprises a first time domain resource in the at least one time window, and the first time domain resource is a time domain resource on which the reference signal is transmitted.

23. The method according to claim 22, wherein
the time domain resource of the reference signal comprises the at least one time window, and the method further comprises: skipping sending the wake-up signal in the at least one time window; or
the time domain resource of the reference signal comprises the first time domain resource in the at least one time window, and the method further comprises:
skipping sending the wake-up signal on the first time domain resource, and/or sending the wake-up signal on a time domain resource in the at least one time window other than the first time domain resource.

24. The method according to claim 22 or 23, wherein the method further comprises:
sending first indication information, wherein the first indication information indicates the at least one time window.

25. The method according to claim 22 or 23, wherein the at least one time window is predefined.

26. The method according to any one of claims 15 to 19, wherein
the time domain resource of the reference signal is different from the time domain resource of the wake-up signal; or
the time domain resource of the reference signal is a resource other than the time domain resource of the wake-up signal.

27. The method according to any one of claims 15 to 26, wherein
the sending the reference signal on the part or all of the time domain resource of the reference signal comprises:
sending the reference signal on the part or all of the time domain resource of the reference signal via the main circuit; and
the sending the wake-up signal on the part or all of the time domain resource of the wake-up signal comprises:
sending the wake-up signal on the part or all of the time domain resource of the wake-up signal via the wake-up circuit.

28. The method according to any one of claims 15 to 27, wherein the method further comprises:
receiving second indication information, wherein the second indication information indicates a time domain resource that is expected by the terminal device for transmission of the reference signal.

29. The method according to any one of claims 1 to 28, wherein the time domain resource of the wake-up signal is discontinuous, or the time domain resource of the wake-up signal is periodic.

30. The method according to any one of claims 1 to 29, wherein a modulation scheme of the wake-up signal is the OOK modulation, and a modulation scheme of the reference signal is the non-OOK modulation.

31. The method according to any one of claims 1 to 30, wherein the reference signal is used to perform at least one of the following: radio link monitoring, beam failure detection, channel measurement, radio resource management measurement, or beam measurement.

32. The method according to claim 31, wherein the radio resource management measurement comprises serving cell measurement and/or neighbor cell measurement.

33. The method according to claim 32, wherein the neighbor cell measurement comprises at least one of the following: intra-frequency measurement, inter-frequency measurement, or inter-radio access technology measurement.

34. A communication apparatus, comprising a module or a unit configured to perform the method according to any one of claims 1 to 33.

35. A communication apparatus, comprising a processor, wherein the processor is configured to execute a computer program or instructions in a memory, to enable the apparatus to perform the method according to any one of claims 1 to 33.

36. The apparatus according to claim 35, wherein the apparatus further comprises the memory and/or a communication interface, and the communication interface is coupled to the processor; and
the communication interface is configured to input and/or output information.

37. A computer-readable storage medium, wherein the computer-readable storage medium stores a computer program or instructions, and when the computer program or the instructions are run on a communication apparatus, the communication apparatus is enabled to perform the method according to any one of claims 1 to 33.

38. A computer program product, wherein the computer program product comprises a computer program or instructions used to perform the method according to any one of claims 1 to 33.
